# EUROPÄISCHE PATENTSCHRIFT

(11) **EP 3 983 761 B1**
(45) Veröffentlichungstag und Bekanntmachung des Hinweises auf die Patenterteilung: **24.01.2024**
(21) Anmeldenummer: 20723858.5
(22) Anmeldetag: 06.05.2020
(51) Int. Cl.: G01F 1/66, G01F 23/296, G01N 9/00, G01N 11/16, G01L 1/00

(54) **VIBRONISCHER MULTISENSOR**
VIBRONIC MULTISENSOR
MULTICAPTEUR VIBRONIQUE

(30) Priorität: 13.06.2019 DE 102019116151
(43) Veröffentlichungstag der Anmeldung: 20.04.2022
(73) Patentinhaber: Endress+Hauser SE+Co. KG, 79689 Maulburg (DE)
(72) Erfinder: LOPATIN, Sergey, 79540 Lörrach (DE); BRENGARTNER, Tobias, 79312 Emmendingen (DE); SCHLEIFERBÖCK, Jan, 79595 Rümmingen (DE); SPRINGMANN, Thorsten, 79688 Hausen (DE); KUHNEN, Raphael, 79418 Schliengen (DE)
(74) Vertreter: Koslowski, Christine Adelheid
(86) Internationale Anmeldenummer: PCT/EP2020/062522
(87) Internationale Veröffentlichungsnummer: WO 2020/249318

(56) Entgegenhaltungen:
- WO-A1-2008/009522
- WO-A1-2015/074833
- DE-A1- 3 149 909
- DE-A1- 10 057 974
- DE-A1- 10 350 084
- DE-A1-102015 112 544
- DE-A1-102016 109 250
- DE-B3-102006 045 654
- US-A- 4 299 114

## Beschreibung

Die Erfindung betrifft eine Vorrichtung zur Bestimmung und/oder Überwachung von zumindest einer ersten und einer zweiten Prozessgröße eines Mediums umfassend eine Sensoreinheit mit einer mechanisch schwingfähigen Einheit, zumindest einem ersten und einem zweiten piezoelektrischen Element, einer Einheit zur Bestimmung und/oder Überwachung der Temperatur des Mediums und mit einer Elektronik. Das Medium befindet sich in einem Behältnis, beispielsweise in einem Behälter oder in einer Rohrleitung.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE00102010030982A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also anhand einer Frequenzverschiebung, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten. Die DE 31 49 909 A1 offenbart eine Vorrichtung zur Bestimmung einer Prozessgröße eines Mediums mit einer Schwinggabel und zwei in den Gabelzinken angeordneten Piezoelementen, welche eine Messstrecke für Ultraschallsignale bilden.

Einen Kombinationssensor, der die Ermittlung von zwei Prozessgrößen erlaubt, offenbart beispielsweise die DE 10 2006 045 654 B3.

Eine weitere Prozessgröße ist der Druck. Dabei wird beispielsweise in der DE 10 2015 112 544 A1 beschrieben, wie der Druck innerhalb eines Sensors gemessen werden kann. Andere Messanordnungen zur Druckmessung an sich offenbaren die WO 2008/009522 A1 oder die DE 100 57 974 A1. In der DE 10 2016 109 250 A1 erfolgt die Messung des CO₂-Partialdrucks mit einem Coriolis-Messgerät. In der WO 2015/074833 A1 wird ebenfalls ein Durchflussmessgerät beschrieben, bei welchem über eine Druckmessung ein CO₂-Anteil im Medium ermittelt wird.

Mit einem vibronischen Sensor lassen sich entsprechend mehrere Prozessgrößen bestimmen und für eine Charakterisierung des jeweiligen Prozesses heranziehen. In vielen Fällen werden für eine umfassende Prozessüberwachung und/oder -kontrolle allerdings weitere Informationen über den Prozess, insbesondere Kenntnis über weitere physikalische und/oder chemische Prozessgrößen und/oder -parameter benötigt. Dies kann beispielsweise durch die Integration weiterer Feldgeräte in den jeweiligen Prozess erreicht werden. Dann können die von den verschiedenen Messgeräten zur Verfügung gestellten Messwerte in einer den Geräten übergeordneten Einheit geeignet weiterverarbeitet werden.

Nun ist es aber so, dass die unterschiedlichen Messgeräte zum einen über unterschiedliche Messgenauigkeiten verfügen. Darüber hinaus können Drift- und/oder Alterungseffekte jeweils sehr unterschiedlich sein. Solche Effekte können aber die jeweilige Messung bzw. Prozessüberwachung und/oder -kontrolle erheblich erschweren bzw. ungenau machen. Darüber hinaus kann es schwierig sein, den jeweiligen Zustand der einzelnen Feldgeräte jeweils im fortlaufenden Betrieb festzustellen. So ist aus der bisher unveröffentlichten deutschen Patentanmeldung mit dem Aktenzeichen 102018127526.9 ein vibronischer Multisensor bekannt geworden, mittels welchem sowohl das vibronische Messprinzip als auch das Ultraschall-Messprinzip zur Bestimmung und/oder Überwachung einer oder mehrerer Prozessgrößen möglich ist.

Ausgehend vom genannten Stand der Technik liegt der vorliegenden Erfindung die Aufgabe zugrunde, die Funktionalität eines vibronischen Sensors weiter zu vergrößern.

Die Aufgabe wird gelöst durch eine Vorrichtung mit den Merkmalen des ersten Anspruchs.

Bei der mechanisch schwingfähigen Einheit handelt es sich um eine Schwinggabel. Das zumindest eine piezoelektrische Element kann beispielsweise im Bereich der schwingfähigen Einheit angeordnet sein. Es dient einerseits als Antriebs-/Empfangseinheit zur Erzeugung der mechanischen Schwingungen der mechanisch schwingfähigen Einheit, welche mittels des Anregesignals erzeugt werden. Die mechanischen Schwingungen wiederum werden im Falle, dass die schwingfähige Einheit von Medium bedeckt ist, von den Eigenschaften des Mediums beeinflusst, so dass anhand des ersten Empfangssignals, welches die Schwingungen der schwingfähigen Einheit repräsentiert, eine Aussage über die zumindest eine Prozessgröße generierbar ist.

Das piezoelektrische Element dient weiterhin der Erzeugung eines Sendesignals, welches in Form des zweiten Empfangssignals empfangen wird. Wenn das Sendesignal auf seinem Weg zumindest zeitweise und abschnittsweise das Medium durchläuft, wird es ebenfalls durch die physikalischen und/oder chemischen Eigenschaften des Mediums beeinflusst und kann entsprechend zur Bestimmung einer Prozessgröße des Mediums herangezogen werden.

Somit ist es im Rahmen der vorliegenden Erfindung möglich, zumindest zwei Messprinzipien in einer einzigen Vorrichtung zu realisieren. Die Sensoreinheit führt einerseits mechanische Schwingungen aus; zudem wird ein Sendesignal ausgesendet. In Reaktion auf die mechanischen Schwingungen und auf das Sendesignal werden zwei Empfangssignale empfangen und können beispielsweise hinsichtlich zumindest zwei unterschiedlicher Prozessgrößen ausgewertet werden. Die beiden Empfangssignale können dabei vorteilhaft unabhängig voneinander ausgewertet werden. So kann erfindungsgemäß die Anzahl ermittelbarer Prozessgrößen deutlich erhöht werden, was zu einer höheren Funktionalität des jeweiligen Sensors bzw. in einem erweiterten Anwendungsbereich resultiert.

Darüber hinaus umfasst die erfindungsgemäße Vorrichtung eine Einheit zur Bestimmung und/oder Überwachung eines Drucks. Diese Einheit umfasst insbesondere einen Drucksensor. Mittels der Einheit zur Bestimmung und/oder Überwachung des Drucks lässt sich beispielsweise der Druck des Mediums anhand eines dritten, von der Einheit empfangenen Empfangssignals, ermitteln. Im Falle eines flüssigen Mediums kann einerseits der Druck der Flüssigkeit und andererseits der Druck der Gasphase des Mediums oberhalb der Flüssigkeit innerhalb des jeweiligen, insbesondere geschlossenen, Behältnisses, bestimmt und/oder überwacht werden. Durch die Bestimmung und/oder Überwachung des Drucks kann der Applikationsbereich des vibronischen Multisensors deutlich erweitert werden.

Die Sensoreinheit umfasst zumindest ein erstes und ein zweites piezoelektrisches Element, wobei das erste und zweite piezoelektrische Element dazu ausgestaltet sind, die mechanisch schwingfähige Einheit mittels eines Anregesignals zu mechanischen Schwingungen anzuregen und die mechanischen Schwingungen der schwingfähigen Einheit zu empfangen und in ein erstes Empfangssignal umzuwandeln, wobei das erste piezoelektrische Element dazu ausgestaltet ist, ein Sendesignal auszusenden, und wobei das zweite piezoelektrische Element dazu ausgestaltet ist, das Sendesignal in Form eines zweiten Empfangssignals zu empfangen. Es können aber auch mehr als zwei piezoelektrische Elemente vorhanden sein, die an unterschiedlichen Positionen relativ zur schwingfähigen Einheit angeordnet sein können.

Bei der mechanisch schwingfähigen Einheit handelt es sich um eine Schwinggabel mit einem ersten und einem zweiten Schwingelement, wobei das erste piezoelektrische Element zumindest teilweise in dem ersten Schwingelement und das zweite piezoelektrische Element zumindest teilweise in dem zweiten Schwingelement angeordnet ist. Entsprechende Ausgestaltungen einer Sensoreinheit sind beispielsweise in den Dokumenten DE102012100728A1 sowie in der bisher unveröffentlichten deutschen Patentanmeldung mit dem Aktenzeichen 102017130527.0 beschrieben worden. Auf beide Anmeldungen wird im Rahmen der vorliegenden Erfindung vollumfänglich Bezug genommen. Bei den in den beiden Dokumenten beschriebenen möglichen Ausgestaltungen der Sensoreinheit handelt es sich um beispielhafte mögliche konstruktive Ausgestaltungen der Sensoreinheit. Es ist beispielsweise nicht zwingend notwendig, die piezoelektrischen Elemente ausschließlich im Bereich der Schwingelemente anzuordnen. Vielmehr können einzelne der verwendeten piezoelektrischen Elemente auch im Bereich der Membran oder in weiteren nicht für die vibronische Anregung verwendeten Schwingelementen, welche ebenfalls auf der Membran aufgebracht sind, angeordnet sein.

Eine Ausgestaltung der Vorrichtung beinhaltet, dass es sich bei der Einheit zur Bestimmung und/oder Überwachung des Drucks um einen Drucksensor in Form eines Relativdrucksensors oder in Form eines Absolutdrucksensors handelt. Der Drucksensor kann an unterschiedlichen Positionen der Sensoreinheit angeordnet sein. Es ist von Vorteil, wenn der Drucksensor derart angeordnet und/oder ausgestaltet ist, dass er den Druck einer Gasphase innerhalb des zumindest teilweise mit Medium gefüllten Behältnisses zu ermitteln kann.

Noch eine bevorzugte Ausgestaltung der Vorrichtung beinhaltet, dass die Sensoreinheit eine Einheit zur Bestimmung und/oder Überwachung einer Temperatur des Mediums und/oder eine Einheit zur Bestimmung und/oder Überwachung einer Leitfähigkeit und/oder einer Kapazität des Mediums umfasst. Durch die Implementierung weiterer Messprinzipien in einem einzigen Sensor können der Applikationsbereich sowie die Messgenauigkeiten des Sensors noch weiter verbreitert bzw. erhöht werden.

Es ist einerseits denkbar, dass die Sensoreinheit gleichzeitig mittels des Anregesignals und mittels des Sendesignals beaufschlagt wird, wobei das Anregesignal und das Sendesignal einander überlagert werden. Alternativ kann die Sensoreinheit aber auch abwechselnd mittels des Anregesignal und mittels des Sendesignals beaufschlagt werden.

Bei dem Anregesignal handelt es sich beispielsweise um ein elektrisches Signal mit zumindest einer vorgebbaren Frequenz, insbesondere um ein sinusförmiges oder um ein rechteckförmiges Signal. Vorzugsweise wird die mechanisch schwingfähige Einheit zumindest zeitweise zu Resonanzschwingungen angeregt. Die mechanischen Schwingungen werden durch das die schwingfähige Einheit umgebende Medium beeinflusst, so dass anhand eines die Schwingungen repräsentierenden Empfangssignals Rückschlüsse auf verschiedene Eigenschaften des Mediums möglich sind.

Bei dem Sendesignal handelt es sich bevorzugt um ein, insbesondere gepulstes, Ultraschallsignal, insbesondere um zumindest einen Ultraschallpuls. Als zweites angewendetes Messverfahren wird demnach im Rahmen der vorliegenden Erfindung eine Ultraschall-basierte Messung durchgeführt. Das jeweils ausgesendete Sendesignal durchläuft zumindest teilweise das Medium und wird von diesem in seinen Eigenschaften beeinflusst. Entsprechend können anhand des jeweils empfangenen zweiten Empfangssignals ebenfalls Rückschlüsse auf verschiedene Medien gezogen werden.

Mit der erfindungsgemäßen Vorrichtung ist eine Vielzahl unterschiedlicher Prozessgrößen mittels unterschiedlicher Messprinzipien ermittelbar. Darüber hinaus kann jeweils der Druck bestimmt und/oder überwacht werden. Unterschiedliche Prozessgrößen lassen sich vorteilhaft unabhängig voneinander bestimmen, so dass eine umfassende Analyse des jeweiligen Prozesses mittels eines einzigen Messgeräts ermöglicht wird. Dadurch, dass dieselbe Sensoreinheit für mehrere Messverfahren zum Einsatz kommt, kann darüber hinaus die Genauigkeit der Messungen deutlich erhöht werden. Darüber hinaus kann anhand der verschiedenen Messprinzipien eine Zustandsüberwachung der Vorrichtung vorgenommen werden.

Erfindungsgemäß ist vorgesehen, dass zumindest zwei unterschiedliche Prozessgrößen ermittelt werden, wobei eine erste Prozessgröße anhand des ersten Empfangssignals ermittelt wird, und wobei eine zweite Prozessgröße anhand des zweiten Empfangssignals ermittelt wird.

Erfindungsgemäß ist vorgesehen, dass ein Druck einer Gasphase innerhalb des Behältnisses, in welchem sich das Medium befindet, ermittelt wird.

Erfindungsgemäß wird ein CO₂-Gehalt des Mediums ermittelt. Die CO₂ -Konzentration in einem flüssigen Medium wird erfindungsgemäß anhand des CO₂-Gehalts des Gasgemisches, welches sich in dem Behältnis, in welchem sich das Medium befindet, oberhalb des flüssigen Mediums ermittelt. Die CO₂ -Konzentration hängt direkt vom CO₂-Partialdruck des Gasgemisches ab, sodass anhand einer Änderung des Druckes des Gasgemisches auf den CO₂-Gehalt in dem Gasgemisch und damit einhergehend auf die CO₂ -Konzentration im Medium geschlossen werden. Zur Bestimmung der CO₂-Konzentration des Mediums kann beispielsweise eine Kennlinie herangezogen werden.

Erfindungsgemäß ist vorgesehen, dass ein Einfluss der CO₂-Konzentration auf die Ermittlung der zumindest einen Prozessgröße kompensiert wird. Insbesondere die Dichte des Mediums sowie die Schallgeschwindigkeit im Medium werden durch die CO₂-Konzentration beeinflusst.

Eine weitere besonders bevorzugte Ausgestaltung beinhaltet, dass es sich bei der zumindest einen Prozessgröße um einen vorgebbaren Füllstand, die Dichte, die Viskosität, die Schallgeschwindigkeit oder eine aus zumindest einer dieser Größen abgeleitete Größe handelt. Besonders bevorzugt wird anhand des ersten Empfangssignals die Dichte des Mediums und anhand des zweiten Empfangssignals die Schallgeschwindigkeit innerhalb des Mediums bestimmt. Es versteht sich jedoch von selbst, dass neben den hier explizit genannten Prozessgrößen auch weitere Prozessgrößen und/oder -parameter, welche mittels der beiden durchgeführten Messungen zugänglich sind, ebenfalls bestimmt und für eine Charakterisierung des jeweiligen Prozesses herangezogen werden können.

Eine Ausgestaltung beinhaltet, dass anhand der Schallgeschwindigkeit ein Referenzwert für die Dichte ermittelt wird, wobei der Referenzwert mittels eines aus dem ersten Empfangssignals ermittelten Wertes für die Dichte verglichen wird. Vorzugsweise wird anhand der aus dem zweiten Empfangssignal ermittelten Schallgeschwindigkeit eine Konzentration einer in einem Referenzmedium gelösten Referenzsubstanz in einem vorgebbaren Behälter ermittelt. Aus der Konzentration kann anschließend der Referenzwert für die Dichte des Referenzmediums ermittelt werden. Zudem kann ein Messwert für die Dichte aus dem ersten Empfangssignal ermittelt werden. Die beiden Werte für die Dichte können dann miteinander verglichen werden. Insbesondere kann der aus dem ersten Empfangssignal ermittelte Wert für die Dichte anhand des aus dem zweiten Empfangssignals ermittelten Referenzwerts für die Dichte justiert werden. Auf diese Weise kann eine nachteilige Beeinflussung der Geometrie des jeweils verwendeten Behältnisses auf die vibronische Bestimmung der Dichte kompensiert werden.

Noch eine besonders bevorzugte Ausgestaltung beinhaltet, dass anhand des ersten und zweiten Empfangssignals und/oder anhand der ersten und zweiten Prozessgröße eine erste Konzentration einer ersten in dem Medium enthaltenen Substanz und eine zweite Konzentration einer zweiten in dem Medium enthaltenen Substanz ermittelt wird. Gemäß Stand der Technik sind für eine derartige Analyse des Mediums auf zwei unterschiedliche Substanzen hin in der Regel zwei separate Messgeräte erforderlich, welche unterschiedliche Messgrößen bereitstellen. Erfindungsgemäß kann dagegen mittels einer einzigen Vorrichtung zuverlässig eine Aussage über zwei unterschiedliche Komponenten in einem Medium getätigt werden.

Eine bevorzugte Verwendung der Vorrichtung betrifft die Überwachung eines Gärprozesses. Bei einer Gärung wird Zucker in Ethanol umgewandelt. Um eine qualitative Überwachung gewährleisten zu können, ist es deshalb erforderlich, sowohl die Konzentration von Zucker als auch von Ethanol zu bestimmen. Dies ist im Rahmen der vorliegenden Erfindung möglich.

Schließlich beinhaltet eine vorteilhafte Ausgestaltung, dass anhand des ersten und zweiten Empfangssignals und/oder anhand der ersten und zweiten Prozessgröße ermittelt wird, ob sich ein Ansatz an der Sensoreinheit gebildet hat und/oder ob eine Drift und/oder Alterung der Sensoreinheit vorliegt. Die beiden Empfangssignale verhalten sich üblicherweise jeweils unterschiedlich in Abhängigkeit eines Ansatzes an der Sondeneinheit, einer Drift oder einer Alterung im Bereich der Sensoreinheit. Das Vorhandensein eines Ansatzes, einer Drift oder einer Alterung kann entsprechend beispielsweise anhand einer zeitlichen Betrachtung der beiden Empfangssignale und/oder Prozessgrößen festgestellt werden.

Es ist von Vorteil, wenn das erste und zweite Empfangssignal, die erste und zweite Prozessgröße und/oder ein zeitlicher Verlauf des ersten und zweiten Empfangssignals und/oder der ersten und zweiten Prozessgröße miteinander verglichen werden. Aus dem Vergleich kann dann auf das Vorhandensein eines Ansatzes, auf eine Drift oder eine Alterung der Sensoreinheit geschlossen werden. Da zumindest zwei Empfangssignale bzw. Prozessgrößen zugänglich sind, kann eine hohe Genauigkeit hinsichtlich der jeweils getroffenen Aussagen über einen Ansatz, eine Drift oder eine Alterung erzielt werden. Durch die erfindungsgemäße Realisierung zweier unterschiedlicher Messungen mit einer einzigen Sensoreinheit kann entsprechend das Vorhandensein von Ansatz, oder auch einer Drift oder eine Alterung der Sensoreinheit zuverlässig erkannt werden.

In einer weiteren, besonders bevorzugten Ausgestaltung wird bei der Bestimmung und/oder Überwachung zumindest einer Prozessgröße oder bei der Bestimmung einer aus zumindest einer Prozessgröße und/oder zumindest einem Empfangssignal abgeleiteten Größe ein Einfluss eines Ansatzes einer Drift und/oder einer Alterung der Sensoreinheit auf das erste und/oder zweite Empfangssignal reduziert oder kompensiert. Der Einfluss eines Ansatzes, einer Drift und/oder Alterung der Sensoreinheit kann demnach bei der Bestimmung und/oder Überwachung der jeweiligen Prozessgröße berücksichtigt werden, so dass die jeweilige Prozessgröße ohne auf dem Vorhandensein eines Ansatzes, einer Drift und/oder Alterung bestimmt werden kann. Zur Reduzierung oder zur Kompensation des Einflusses kann beispielsweise ein geeigneter, insbesondere prozessabhängiger, Algorithmus hinterlegt werden, anhand dessen ein nicht durch den Einfluss des Ansatzes, der Drift und/oder Alterung der Sensoreinheit verfälschter Wert für die jeweilige Prozessgröße ermittelbar ist. Somit kann eine verbesserte Messgenauigkeit erreicht sowie eine Möglichkeit zur vorausschauenden Wartung (engl. predictive maintenance) bereitgestellt werden.

Die Erfindung wird anhand der nachfolgenden Figuren näher erläutert. Es zeigt:
Fig. 1: eine schematische Skizze eines vibronischen Sensors gemäß Stand der Technik,
Fig. 2 mehrere mögliche an sich aus dem Stand der Technik bekannte Ausgestaltungen einer Sensoreinheit, und
Fig. 3 eine mögliche Ausgestaltung einer erfindungsgemäßen Vorrichtung.

In den Figuren sind gleiche Elemente jeweils mit demselben Bezugszeichen versehen.

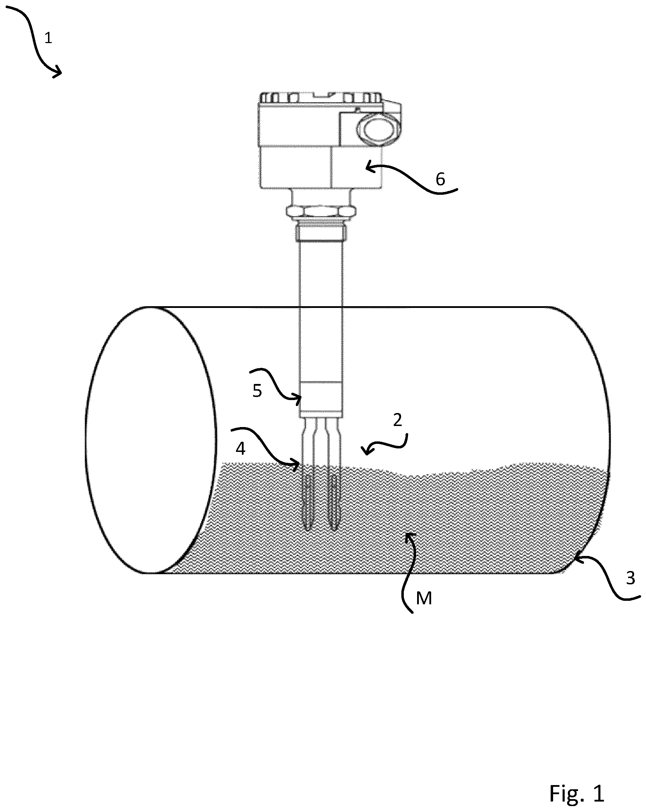

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs-/Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder -speisung erfolgt.

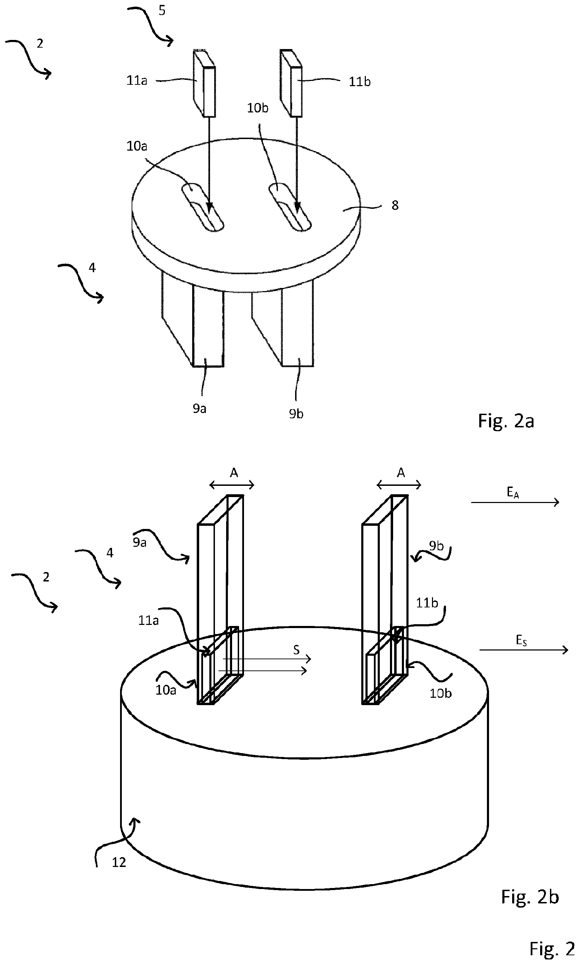

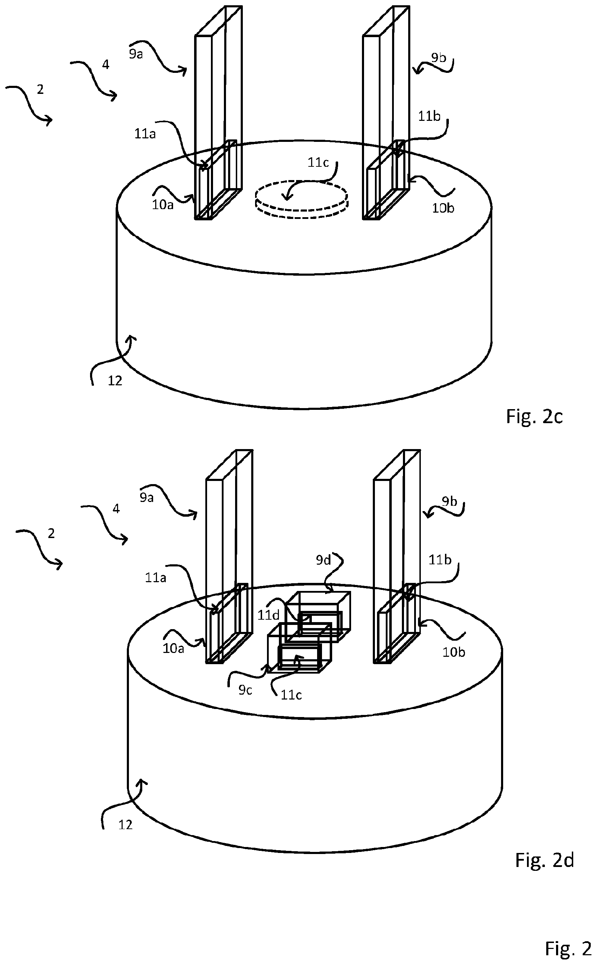

In Fig. 2 sind beispielhaft verschiedene Sensoreinheiten 2 gezeigt. Die in Fig. 2a gezeigte mechanisch schwingfähige Einheit 4 umfasst zwei an einer Basis 8 angebrachte Schwingelemente 9a,9b, welche mithin auch als Gabelzinken bezeichnet werden. Optional kann an den Endseiten der beiden Schwingelemente 9a,9b außerdem jeweils ein Paddel angeformt sein [hier nicht gezeigt]. In jedem der beiden Schwingelemente 9a,9b ist jeweils ein, insbesondere taschenartiger, Hohlraum 10a, 10b eingebracht, in welchem jeweils zumindest ein piezoelektrisches Element 11a, 11b der Antriebs-/Empfangseinheit 5 angeordnet ist. Vorzugsweise sind die piezoelektrischen Elemente 11a und 11b innerhalb der Hohlräume 10a und 10b vergossen. Die Hohlräume 10a, 10b können dabei so beschaffen sein, dass sich die beiden piezoelektrischen Elemente 11a, 11b vollständig oder teilweise im Bereich der beiden Schwingelemente 9a, 9b befinden Eine solche sowie ähnliche Anordnungen sind in der DE102012100728A1 ausführlich beschrieben.

Eine weitere beispielhafte, mögliche Ausgestaltung einer Sensoreinheit 2 ist in Fig. 2b dargestellt. Die mechanisch schwingfähige Einheit 4 verfügt über zwei parallel zueinander ausgerichtete, hier stabförmig ausgestaltete, auf einem scheibenförmigen Element 12 angebrachte, Schwingelemente 9a, 9b, welche getrennt voneinander zu mechanischen Schwingungen anregbar sind, und bei denen die Schwingungen ebenfalls getrennt voneinander empfangen und ausgewertet werden können. Beide Schwingelemente 9a und 9b weisen jeweils einen Hohlraum 10a und 10b auf, in welchen im dem scheibenförmigen Element 12 zugewandten Bereich jeweils zumindest ein piezoelektrisches Element 11a und 11b angeordnet ist. Bezüglich der Ausgestaltung gemäß Fig. 2b sei wiederum ferner auf in die bisher unveröffentlichte deutsche Patentanmeldung mit dem Aktenzeichen DE102017130527A1 verwiesen.

Wie in Fig. 2b schematisch eingezeichnet, wird erfindungsgemäß die Sensoreinheit 2 einerseits mit einem Anregesignal A beaufschlagt, derart, dass die schwingfähige Einheit 4 zu mechanischen Schwingungen angeregt wird. Die Schwingungen werden dabei vermittels der beiden piezoelektrischen Elemente 11a und 11b erzeugt. Es ist sowohl denkbar, dass beide piezoelektrischen Elemente mit demselben Anregesignal A beaufschlagt werden, als auch eine Beaufschlagung des ersten Schwingelements 11a mittels eines ersten Anregesignals A₁ und des zweiten Schwingelements 11b mittels eines zweiten Anregesignals A₂. Ebenso ist es sowohl denkbar, dass anhand der mechanischen Schwingungen ein erstes Empfangssignal E_{A}, oder von jedem Schwingelement 9a,9b ein separates Empfangssignal E_{A1} bzw. E_{A2} empfangen wird.

Darüber hinaus wird vom ersten piezoelektrischen Element 11a ausgehend ein Sendesignal S ausgesendet, welches von dem zweiten piezoelektrischen Element 11b in Form eines zweiten Empfangssignals Es empfangen wird. Da die beiden piezoelektrischen Elemente 11a und 11b zumindest im Bereich der Schwingelemente 9a und 9b angeordnet sind, durchläuft das Sendesignal S das Medium M, sofern die Sensoreinheit 2 mit dem Medium M in Kontakt ist und wird entsprechend von den Eigenschaften des Mediums M beeinflusst. Vorzugsweise handelt es sich bei dem Sendesignal S um ein, insbesondere gepulstes, Ultraschallsignal, insbesondere um zumindest einen Ultraschallpuls. Ebenso ist es aber denkbar, dass das Sendesignal S von dem ersten piezoelektrischen Element 11a im Bereich des ersten Schwingelements 9a ausgesendet wird und an dem zweiten Schwingelement 9b reflektiert wird. In diesem Falle wird das zweite Empfangssignal Es vom ersten piezoelektrischen Element 11a empfangen. Das Sendesignal S durchläuft in diesem Falle das Medium M zweimal, was zu einer Verdoppelung einer Laufzeit r des Sendesignals S führt.

Neben diesen beiden gezeigten Ausgestaltungen einer erfindungsgemäßen Vorrichtung 1 sind noch zahlreiche weitere Varianten denkbar, welche ebenfalls unter die vorliegende Erfindung fallen. Beispielsweise ist es für die Ausgestaltungen gemäß der Figuren Fig. 2a und Fig. 2b möglich, lediglich ein piezoelektrisches Element 11a, 11b zu verwenden und zumindest in einem der beiden Schwingelemente 9a, 9b anzuordnen. In diesem Falle dient das piezoelektrische Element 9a zur Erzeugung des Anregesignals, und des Sendesignals S, sowie zum Empfangen des ersten E₁ und zweiten Empfangssignals E₂. Das Sendesignal wird in diesem Falle an dem zweiten Schwingelement 9b ohne piezoelektrisches Element 11b reflektiert.

Eine weitere, beispielhafte Möglichkeit ist in Fig. 2c dargestellt. Hier ist ein drittes piezoelektrisches Element 11c im Bereich der Membran 12 vorgesehen. Das dritte piezoelektrische Element 11c dient der Erzeugung des Anregesignals A und zum Empfangen des ersten Empfangssignals E₁; das erste 11a und zweite piezoelektrische Element 11b dienen der Erzeugung des Sendesignals S bzw. dem Empfangen des zweiten Empfangssignals E₂. Alternativ ist es beispielsweise möglich, mit dem ersten 11a und/oder zweiten piezoelektrischen Element 11b das Anregesignal A und das Sendesignal S zu erzeugen sowie das zweite Empfangssignal E₂ zu empfangen, wobei das dritte piezoelektrische Element 11c zum Empfangen des ersten Empfangssignals E₁ dient. Ebenso ist es möglich, mit dem ersten 11a und/oder zweiten piezoelektrischen Element 11b das Sendesignal S und mit dem dritten piezoelektrischen Element 11c das Anregesignal A zu erzeugen und mit dem ersten 11a und/oder zweiten piezoelektrischen Element 11b das erste E₁ und/oder zweite Empfangssignal E₂ zu empfangen. Auch im Falle der Fig. 2c ist es für andere Ausgestaltungen möglich, auf das erste 11a oder zweite piezoelektrische Element 11b zu verzichten.

Noch eine mögliche Ausgestaltung der Vorrichtung 1 ist Gegenstand von Fig. 2d. Die Vorrichtung umfasst ausgehend von der Ausgestaltung aus Fig. 2b ein drittes 9c und ein viertes Schwingelement 9d. Diese dienen jedoch nicht einer Schwingungserzeugung. Vielmehr ist in den zusätzlichen Elemente 9c, 9d jeweils ein drittes 11c und viertes piezoelektrisches Element 11d angeordnet. In diesem Falle wird die vibronische Messung mittels der ersten beiden piezoelektrischen Elemente 11a, 11b und die Ultraschallmessung mittels der anderen beiden piezoelektrischen Elemente 11c, 11d durchgeführt. Auch hier kann je Messprinzip auf ein piezoelektrisches Element, z. B. 11b und 11d verzichtet werden. Aus Symmetriegründen ist es dagegen vorteilhaft, stets zwei zusätzliche Schwingelemente 9c, 0d zu verwenden.

Das erste E_{A} und zweite Empfangssignal Es resultieren aus unterschiedlichen Messverfahren und können unabhängig voneinander hinsichtlich zumindest einer Prozessgröße P ausgewertet werden. In dieser Hinsicht sei auf die bisher unveröffentlichte deutsche Patentanmeldung mit dem Aktenzeichen 102018127526.9 verwiesen, auf welche im Rahmen der vorliegenden Erfindung vollumfänglich Bezug genommen wird.

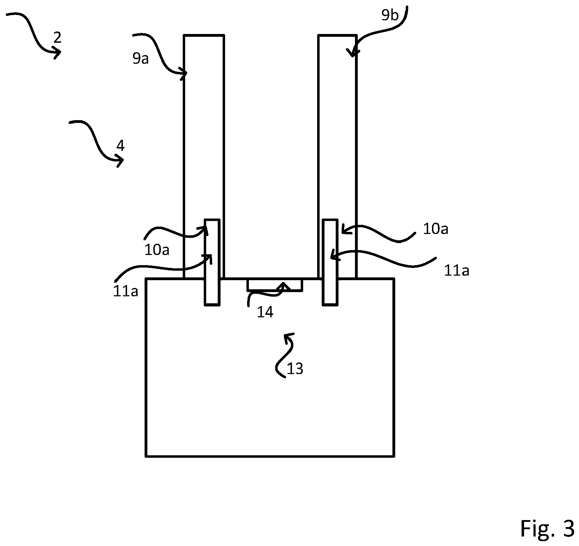

Darüber hinaus kann erfindungsgemäß eine Aussage über den Druck p des Mediums und/oder über den Druck p eines oberhalb eines flüssigen Mediums M angeordneten Gasgemischs gemacht werden. Hierzu verfügt die erfindungsgemäße Vorrichtung 1 über eine Einheit zur Bestimmung und/oder Überwachung des Drucks p, wie in Fig. 3 illustriert. In Fig. 3 ist eine Sensoreinheit 2 analog zur Ausgestaltung aus Fig. 2a gezeigt. Zwischen den beiden Schwingelementen 9a und 9b der in Form einer Schwinggabel ausgestalteten schwingfähigen Einheit 4 ist die Einheit 13 zur Bestimmung und/oder Überwachung des Drucks p angeordnet, welche eine Drucksensor 14 in Form eines Relativdrucksensor umfasst.

### Bezugszeichenliste

- 1: Vibronischer Sensor
- 2: Sensoreinheit
- 3: Behälter
- 4: Schwingfähige Einheit
- 5: Antriebs-/Empfangseinheit
- 6: Elektronik
- 8: Basis
- 9a, 9b: Schwingelemente
- 10a, 10b: Hohlräume
- 11a, 11b: piezoelektrische Elemente
- 12: scheibenförmiges Element
- 13: Einheit zur Bestimmung und/oder Überwachung der Temperatur
- 14: Temperatursensor

- M: Medium
- P: Prozessgröße
- p: Druck
- A: Anregesignal
- S: Sendesignal
- E_{A}: erstes Empfangssignal
- E_{S}: zweites Empfangssignal
- Eₚ: drittes Empfangssignal
- ΔΦ: vorgebbare Phasenverschiebung

## Patentansprüche

1. Vorrichtung (1) zur Bestimmung und/oder Überwachung von zumindest einer ersten Prozessgröße (P1) und einer zweiten Prozessgröße (P2) eines Mediums (M) umfassend eine Sensoreinheit (2) mit
einer mechanisch schwingfähigen Einheit (4),
zumindest einem ersten piezoelektrischen Element (11a), einem zweiten piezoelektrischen Element (11b) und
einer Einheit (13) zur Bestimmung und/oder Überwachung eines Drucks (p),
und
eine Elektronik (6),
wobei die mechanisch schwingfähige Einheit (4) eine Schwinggabel mit einem ersten Schwingelement (9a) und einem zweiten Schwingelement (9b) ist,
wobei das erste piezoelektrische Element (11a) zumindest teilweise in dem ersten Schwingelement (9a) und das zweite piezoelektrische Element (11b) zumindest teilweise in dem zweiten Schwingelement (9b) angeordnet ist,
wobei das erste piezoelektrische Element (11a) und das zweite piezoelektrische Element (11b) dazu ausgestaltet sind, die mechanisch schwingfähige Einheit (4) mittels eines Anregesignals (A) zu mechanischen Schwingungen anzuregen und die mechanischen Schwingungen der schwingfähigen Einheit (4) zu empfangen und in ein erstes Empfangssignal (E_{A}) umzuwandeln,
wobei das erste piezoelektrische Element (11a) dazu ausgestaltet ist, ein Sendesignal (S) auszusenden, und
wobei das zweite piezoelektrische Element (11b) dazu ausgestaltet ist, das Sendesignal (S) in Form eines zweiten Empfangssignals (Es) zu empfangen,
wobei die Elektronik (6) dazu ausgestaltet ist, anhand des ersten Empfangssignals (E_{A}) die erste Prozessgröße (P1) und anhand des zweiten Empfangssignals (Es) die zweite Prozessgröße (P2) zu ermitteln und anhand eines dritten, von der Einheit (13) empfangenen, Empfangssignals (Eₚ) den Druck (p) des Mediums (M) zu bestimmen, wobei die Elektronik (6) dazu ausgestaltet ist, einen Druck (p) eines Gasgemischs, welches sich in dem Behältnis (3), in welchem sich das Medium (M) befindet, oberhalb des Mediums (M) befindet, zu ermitteln,
wobei die Elektronik (6) dazu ausgestaltet ist, anhand einer Änderung des Drucks (p) auf einen CO₂-Gehalt in dem Gasgemisch und damit einhergehend auf eine CO₂-Konzentration im Medium (M) zu schließen, und
wobei die Elektronik (6) dazu ausgestaltet ist, einen Einfluss der CO₂-Konzentration im Medium (M) auf die Ermittlung der ersten Prozessgröße (P1) und/oder der zweiten Prozessgröße (P2) zu kompensieren.

2. Vorrichtung (1) nach Anspruch 1,
wobei die Sensoreinheit eine Einheit zur Bestimmung und/oder Überwachung einer Temperatur des Mediums (M) und/oder eine Einheit zur Bestimmung und/oder Überwachung einer Leitfähigkeit und/oder Kapazität des Mediums (M) umfasst.

3. Vorrichtung (1) nach Anspruch 1 oder 2,
wobei die Elektronik (6) dazu ausgestaltet ist, einen Einfluss der Dichte des Mediums (M) auf die Bestimmung und/oder Überwachung des Füllstands zu kompensieren.

4. Vorrichtung nach einem der Ansprüche 1 bis 3,
wobei die Elektronik (6) dazu ausgestaltet ist, anhand des ersten (E_{A}) und zweiten Empfangssignals (Es) und/oder anhand der ersten Prozessgröße (P1) und der zweiten Prozessgröße (P2) zu ermitteln, ob sich ein Ansatz an der Sensoreinheit (2) gebildet hat und/oder ob eine Drift und/oder eine Alterung der Sensoreinheit (2) vorliegt.

## Claims

1. A device (1) for determining and/or monitoring at least a first process variable (P1) and a second process variable (P2) of a medium (M), comprising a sensor unit (2) with
a unit that can mechanically oscillate (4),
at least one first piezoelectric element (11a), a second piezoelectric element (11b),
and
a unit (13) for determining and/or monitoring a pressure (p),
and
electronics (6),
wherein the unit that can mechanically oscillate (4) is an oscillating fork with a first oscillating element (9a) and a second oscillating element (9b),
wherein the first piezoelectric element (11a) is arranged at least partially in the first oscillating element (9a), and the second piezoelectric element (11b) is arranged at least partially in the second oscillating element (9b),
wherein the first piezoelectric element (11a) and the second piezoelectric element (11b) are configured to cause the unit that can mechanically oscillate (4) to mechanically oscillate by means of an excitation signal (A), and to receive the mechanical oscillations of the unit that can oscillate (4) and convert these into a first received signal (E_{A}),
wherein the first piezoelectric element (11a) is configured to send a transmission signal (S), and
wherein the second piezoelectric element (11b) is configured to receive the transmission signal (S) in the form of a second received signal (Es),
wherein the electronics (6) are configured to determine the first process variable (P1) based on the first received signal (E_{A}) and the second process variable (P2) based on the second received signal (Es), and to determine the pressure (p) of the medium (M) based on a third received signal (Eₚ) sent to the unit (13),
wherein the electronics (6) are configured to determine a pressure (p) of a gas mixture which is located in the same container (3) as the medium (M), above the medium (M), wherein the electronics (6) are configured to work out the CO₂ content in the gas mixture and a resultant CO₂ concentration in the medium (M) based on a change in the pressure (p), and
wherein the electronics (6) are configured to compensate for an effect of the CO₂ concentration in the medium (M) on the determination of the first process variable (P1) and/or the second process variable (P2).

2. The device (1) as claimed in claim 1,
wherein the sensor unit comprises a unit for determining and/or monitoring a temperature of the medium (M) and/or a unit for determining and/or monitoring a conductivity and/or capacitance of the medium (M).

3. The device (1) as claimed in claim 1 or 2,
wherein the electronics (6) are configured to compensate for an effect of the density of the medium (M) on the determination and/or monitoring of the fill level.

4. The device as claimed in one of claims 1 to 3,
wherein the electronics (6) are configured to determine whether deposits have formed on the sensor unit (2) and/or whether the sensor unit (2) has experienced drift and/or aging based on the first (E_{A}) and second (Es) received signals and/or based on the first process variable (P1) and the second process variable (P2).

## Revendications

1. Dispositif (1) destiné à la détermination et/ou à la surveillance d'au moins une première grandeur de process (P1) et d'une deuxième grandeur de process (P2) d'un produit (M), lequel dispositif comprend une unité de capteur (2) avec
une unité apte à vibrer mécaniquement (4),
au moins un premier élément piézoélectrique (11a), un deuxième élément piézoélectrique (11b) et
une unité (13) destinée à la détermination et/ou à la surveillance d'une pression (p),
et
une électronique (6),
l'unité apte à vibrer mécaniquement (4) étant une fourche vibrante avec un premier élément vibrant (9a) et un deuxième élément vibrant (9b),
le premier élément piézoélectrique (11a) étant disposé au moins partiellement dans le premier élément vibrant (9a) et le deuxième élément piézoélectrique (11b) étant disposé au moins partiellement dans le deuxième élément vibrant (9b), le premier élément piézoélectrique (11a) et le deuxième élément piézoélectrique (11b) étant conçus pour exciter l'unité apte à vibrer mécaniquement (4) en vibrations mécaniques au moyen d'un signal d'excitation (A) et pour recevoir les vibrations mécaniques de l'unité apte à vibrer (4) et les convertir en un premier signal de réception (E_{A}),
le premier élément piézoélectrique (11a) étant conçu pour émettre un signal d'émission (S), et
le deuxième élément piézoélectrique (11b) étant conçu pour recevoir le signal d'émission (S) sous la forme d'un deuxième signal de réception (Es),
l'électronique (6) étant conçue pour déterminer la première grandeur de process (P1) à l'aide du premier signal de réception (E_{A}) et la deuxième grandeur de process (P2) à l'aide du deuxième signal de réception (Es) et pour déterminer la pression (p) du produit (M) à l'aide d'un troisième signal de réception (Eₚ) reçu par l'unité (13),
l'électronique (6) étant conçue pour déterminer une pression (p) d'un mélange gazeux se trouvant dans le réservoir (3) dans lequel se trouve le produit (M), lequel mélange gazeux se trouve au-dessus du produit (M),
l'électronique (6) étant conçue pour déduire, à l'aide d'une modification de la pression (p), une teneur en CO₂ dans le mélange gazeux et, par conséquent, une concentration en CO₂ dans le produit (M), et
l'électronique (6) étant conçue pour compenser une influence de la concentration en CO₂ dans le produit (M) sur la détermination de la première grandeur de process (P1) et/ou de la deuxième grandeur de process (P2).

2. Dispositif (1) selon la revendication 1,
pour lequel l'unité de capteur comprend une unité destinée à la détermination et/ou à la surveillance d'une température du produit (M) et/ou une unité destinée à la détermination et/ou à la surveillance d'une conductivité et/ou d'une capacité du produit (M).

3. Dispositif (1) selon la revendication 1 ou 2,
pour lequel l'électronique (6) est conçue pour compenser une influence de la densité du produit (M) sur la détermination et/ou la surveillance du niveau.

4. Dispositif (1) selon l'une des revendications 1 à 3,
pour lequel l'électronique (6) est conçue pour déterminer, à l'aide du premier signal de réception (E_{A}) et du deuxième signal de réception (Es) et/ou à l'aide de la première grandeur de process (P1) et de la deuxième grandeur de process (P2), si un dépôt s'est formé sur l'unité de capteur (2) et/ou s'il y a une dérive et/ou un vieillissement de l'unité de capteur (2).
